# EUROPEAN PATENT APPLICATION

(11) **EP 4 083 748 A1**
(43) Date of publication of application: **02.11.2022**
(21) Application number: 21759222.9
(22) Date of filing: 31.05.2021
(51) Int. Cl.: G06F 1/16

(54) **ELECTRONIC DEVICE SUPPORTING APPARATUS AND ELECTRONIC DEVICE**

(30) Priority: 04.03.2021 CN 202110239672
(71) Applicant: BEIJING BYTEDANCE NETWORK TECHNOLOGY CO., LTD., Beijing 100041 (CN)
(72) Inventor: LIU, Chengcheng, Beijing 100080 (CN)
(74) Representative: Dentons UK and Middle East LLP
(86) International application number: PCT/CN2021/097249
(87) International publication number: WO 2022/183608

(57) **Abstract**

A support apparatus for an electronic device and an electronic device are provided. The support apparatus includes a connector; a first body connected to the connector; a second body connected to the connector, the second body and the first body being capable of maintaining a first positional relationship via the connector; and a supporting body, one end of which being pivotally connected to the connector and the other end being a free end; and the supporting body having a first state and a second state. If the supporting body is in the first state, the supporting body is placed against the second body; and if the supporting body is in the second state, the free end and at least a part of the second body are supported on a supporting face provided by a supporter, to provide a balanced state for the support apparatus relative to the supporting face.

## Description

The present disclosure claims the priority of a Chinese Patent Application No. 202110239672.8 entitled "Support Apparatus for an Electronic Device, and Electronic Device" filed with the CNIPA on March 4, 2021, which is incorporated herein by reference in its entirety.

### Technical Field

Embodiments of the present disclosure relate to the technology of supporting an electronic device, and in particular to a support apparatus for an electronic device and an electronic device.

### Background

At present, portable electronic devices have been widely used, and the case of using portable electronic devices by users is pervasive, such as operations like Online Surfing and video viewing. In many functions, portable electronic devices can replace traditional desktops and notebook computers.

### Summary

Embodiments of the present disclosure provide a support apparatus for an electronic device and an electronic device.

According to a first aspect of the embodiments of the present disclosure, there is provided a support apparatus for an electronic device, including:
a connector;
a first body connected to the connector;
a second body connected to the connector, the second body and the first body being configured to be able to maintain a first positional relationship via the connector; and
a supporting body, a first end of the supporting body being pivotally connected to the connector, and a second end of the supporting body being a free end, and the supporting body having a first state and a second state; wherein
in a case that the supporting body is in the first state, the supporting body is placed against the second body; and
in a case that the supporting body is in the second state, the free end and at least a part of the second body are supported on a supporting face provided by a supporter, to provide a balanced state for the support apparatus relative to the supporting face.

According to a second aspect of the embodiments of the present disclosure, there is provided a support apparatus for an electronic device, including:
a connector;
a first body connected to the connector;
a second body connected to the connector, the second body and the first body being configured to be able to maintain a first positional relationship via the connector; and
a supporting body, a first end of the supporting body being pivotally connected to the second body, and a second end of the supporting body being a free end; and the supporting body having a first state and a second state; wherein
in a case that the supporting body is in the first state, the supporting body is placed against the second body; and
in a case that the supporting body is in the second state, the free end and at least a part of the second body are supported on a supporting face provided by a supporter, to provide a balanced state for the support apparatus relative to the supporting face.

According to a third aspect of the embodiments of the present disclosure, there is provided an electronic device, wherein the electronic device includes an electronic device body and the above support apparatus for the electronic device; the electronic device body is provided on the support apparatus for the electronic device.

### Brief Description of the Drawings

For the purpose of more clearly illustrating the embodiments of the present disclosure or technical solutions in the prior art, drawings necessary for description of the embodiments or the prior art will be briefly introduced below. Apparently, the drawings in the following description are some embodiments of the present disclosure, based on which other drawings can be obtained by those of ordinary skill in the art without creative work.

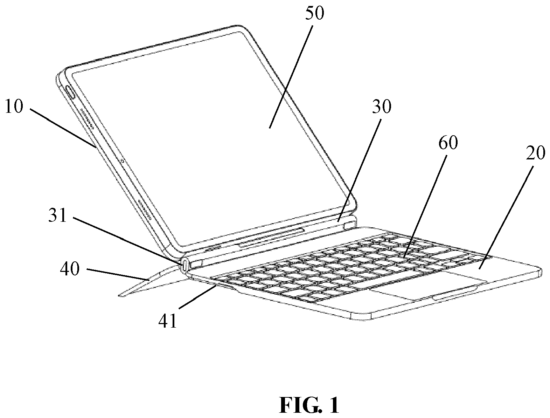

FIG. 1 is a schematic structural diagram of a support apparatus for an electronic device according to an embodiment of the present disclosure.

### Detailed Description

The essence of the technical solutions according to the embodiments of the present disclosure will be illustrated in detail below with reference to the accompanying drawing.

FIG. 1 is a schematic structural diagram of a support apparatus for an electronic device according to an embodiment of the present disclosure. As shown in FIG. 1, the support apparatus for an electronic device according to the embodiment of the present disclosure includes:
a connector 30;
a first body 10 connected to the connector 30;
a second body 20 connected to the connector 30, wherein the second body 20 and the first body 10 can maintain a first positional relationship via the connector 30; and
a supporting body 40, wherein a first end of the supporting body is pivotally connected to the connector 30, and a second end of the supporting body is a free end; the supporting body 40 has a first state and a second state.

In a case that the supporting body 40 is in the first state, the supporting body 40 is placed against the second body 20.

In a case that the supporting body 40 is in the second state, the free end and at least a part of the second body 20 are supported on a supporting face provided by a supporter, to provide a balanced state for the support apparatus relative to the supporting face.

In an embodiment of the present disclosure, a first face of the second body 20 is provided with an accommodation space 41. The accommodation space 41 matches the profile of the supporting body 40, such that the supporting body 40 can be completely accommodated therein. In the case that the supporting body 40 is in the first state, the supporting body 40 is received in the accommodation space, and the supporting body 40 is placed against the first face of the second body 20. Here, the first face of the second body 20 refers to an outer face of the second body 20, i.e. a face in contact with the supporter. By accommodating the supporting body 40 in the accommodation space provided on the first face of the second body 20, a face of the supporting body 40 exposed beyond the first face of the second body 20 can be perfectly placed in alignment with the first face of the second body 20. If viewed from the outside, the first face of the second body 20 is a whole, thereby ensuring consistency of the overall appearance of the support apparatus for an electronic device according to the embodiment of the present disclosure.

In the case that the supporting body 40 is in the second state, the free end of the supporting body 40 and at least a part of the second body 20 are supported on a supporting face (not shown) provided by a supporter, to provide a balanced state for the support apparatus according to the embodiment of the present disclosure relative to the supporting face. In the figure, the free end of the supporting body 40 and an end of the second body 20 away from the connector 30 work together on the supporting face provided by the supporter to brace the support apparatus according to the embodiment of the present disclosure.

In an embodiment of the present disclosure, a supporting function can be stably realized by providing the supporting body 40. Even if an object to be supported, such as a tablet computer, is placed on the first body 10 according to the embodiment of the present disclosure, the support apparatus according to the embodiment of the present disclosure will not be crushed due to the weight of the tablet computer. In a support apparatus without a supporting body 40, since a portable electronic device, such as a tablet computer, is placed on the first body 10, in order to maintain the overall balance and provide a firm support for the portable electronic device, it is necessary to set the overall weight of the second body 20 to be heavy enough, or to add a counterweight and the like to the second body 20, resulting in a heavy overall weight of the support apparatus, which is considerably inconvenient to use.

In an embodiment of the present disclosure, the first positional relationship is used to characterize an angle between the first body 10 and the second body 20. Both the first body 10 and the second body 20 can rotate via the connector 30, so that the angle between the first body 10 and the second body 20 can be changed depending on user's requirements in use. The angle between the first body 10 and the second body 20 according to the embodiment of the present disclosure has following characteristics:
under an external force, the second body 20 and the first body 10 can adjust the angle therebetween via the connector 30; and
upon removal of the external force, the second body 20 and the first body 10 maintain the angle therebetween based on the connector 30.

It should be emphasized that in comparison with a traditional notebook computer, the first body 10 of the support apparatus for an electronic device according to the embodiment of the present disclosure is only a supporting plate. A portable electronic device such as a tablet computer can be installed on the first body 10. In addition, information can be input into the portable electronic device via an input device such as a key board, a touch panel and a touch screen provided on the second body, and the information can be displayed on a display screen of the portable electronic device. In other words, the support apparatus for an electronic device according to the embodiment of the present disclosure only provides support for a portable electronic device, and may not have information processing capabilities.

In an embodiment of the present disclosure, adjustment of the angle between the second body 20 and the first body 10 will not be affected by the state of the supporting body 40. In other words, in a case that the supporting body 40 is provided on the connector 30, both the second body 20 and the first body 10 can rotate relative to the connector 30 without being affected by the supporting body 40. In a case that the supporting body 40 is received in the accommodation space 41, the second body 20 and the first body 10 can be rotated relative to the connector 30 by an external force to open or close without being affected by the supporting body 40.

In a case that the second body 20 and the first body 10 are opened or closed, the supporting body 40 can be separated from the second body 20 and thus opened by an external force. Therefore, state changing of the supporting body 40 will not be affected by adjustment of the angle.

In an embodiment of the present disclosure, in a case that the connector 30 has a rotating shaft structure, the supporting body 40 is provided on a shaft sleeve of the rotating shaft. In this way, in a case that the second body 20 and the first body 10 adjust the angle therebetween based on the connector 30, the supporting body 40 will not be affected by the angle adjustment between the second body 20 and the first body 10.

In an embodiment of the present disclosure, a first face of the second body 20 is provided with an accommodation space 41. The first face of the second body 20 is one face of the second body 20 opposed to the other face on which an input device, such as a keyboard, is provided.

In the case that the supporting body 40 is in the first state, the supporting body 40 is received in the accommodation space, and the supporting body 40 is placed in alignment with the first face of the second body 20. At this time, the supporting body 40 and the second body 20 are in an integral form, that is to say, the surface of the supporting body 40 exposed on the second body 20 is located in the same plane as the first face of the second body 20, and an end face of the supporting body 40 at the connector 30 is flush with the face of the connector 30, such that they appear as a whole.

In an embodiment of the present disclosure, the supporting body 40 may have a plate structure. The supporting body 40 may also have a columnar structure. In some embodiments, the supporting body 40 has a columnar structure and may be symmetrically arranged at both ends of the connector 30 to brace the support apparatus according to the embodiment of the present disclosure, so that the support apparatus according to the embodiment of the present disclosure can maintain a balance as a whole. In some embodiments, the supporting body 40 has a columnar structure and may be arranged in the middle of the connector 30. In some embodiments, the supporting body 40 has a strip structure.

In an embodiment of the present disclosure, as shown in FIG. 1, a first electronic device 50 is provided on a first face of the first body 10. The first electronic device 50 has a display module, a display output area of the display module is exposed on a first surface of the first electronic device 50, and a second surface of the first electronic device 50 is placed against the first face of the first body, wherein the first surface is opposite to the second surface. Here, the first electronic device 50 may be a tablet computer, a PAD, an electronic notepad, an electronic reader or other electronic devices. The display module includes a liquid crystal display, a touch screen, etc. The first face of the first body 10 is a face of the first body 10 on which the first electronic device 50 is provided and which faces a second face of the second body 20 on which a keyboard is provided.

In an embodiment of the present disclosure, a second electronic device 60 is provided on a second face of the second body 20. The second electronic device 60 has an information input area, the input area is exposed on a third surface of the second electronic device 60, and a fourth surface of the second electronic device 60 is placed against the second face of the second body 20, wherein the third surface is opposite to the fourth surface. In an embodiment of the present disclosure, the second electronic device 60 may be an input device such as a keyboard, a touch panel or a touch screen.

In an embodiment of the present disclosure, the second electronic device 60 and the second face of the second body 20 may also be connected in a detachable manner. For example, by providing a snap-in slot on the second face of the second body 20, the second electronic device 60 may be snapped into and removed from the snap-in slot.

A first electrical interface (not shown) is also provided on the first face of the first body 10.

Correspondingly, a second electrical interface (not shown) is provided on the second surface of the first electronic device 50. In a case that the second surface of the first electronic device 50 is placed against the first face of the first body 10, the second electrical interface is connected to the first electrical interface, and the first electronic device 50 is connected to the second electronic device 60.

The first electronic device 50 further has a processing module. In response to an operation on the information input area of the second electronic device 60, the processing module receives the operation, and based on first information input through the information input area, displays the first information on the display module. In other words, in a case that the first electronic device 50 is connected to the support apparatus for an electronic device according to the embodiment of the present disclosure via the first electrical interface 11, since the first electrical interface 11 and the second electronic device have been provided with a corresponding electrical connection in advance, in a case that a relevant interface connection communication protocol is met, the first electronic device 50 may be controlled by the second electronic device 60, which is equivalent to providing a dedicated information input device for a tablet computer and the like, and the tablet computer may be controlled by the information input device such as a keyboard. For example, a programming operation and the like may be performed on the first electronic device 50.

Those skilled in the art will understand that even if an electrical connection relationship is established between the first electronic device 50 and the second electronic device 60, the user can still directly control the first electronic device 50. For example, the first electronic device may be controlled via a touch pad, a touch panel and the like of the first electronic device.

In an embodiment of the present disclosure, the first electrical interface 11 has a pogo pin structure, and the second electrical interface has a contact structure. In a case that the pogo pin structure is connected to the contact structure, the first electronic device 50 is electrically connected to the second electronic device 60.

In an embodiment of the present disclosure, in order to firmly connect the first electronic device 50 and the first body 10, a first magnetic module may be provided on the first body 10. A second magnetic module or a connecting component attractable with respect to the first magnetic module is provided at a position of the first electronic device 50 corresponding to the magnetic module; or a component or a housing is provided at a position of the first electronic device 50 corresponding to the magnetic module, the component or the housing being made of a material attractable with respect to the first magnetic module.

In some embodiments, a magnetic module is provided on the first face of the first body 10. In some embodiments, a magnetic module is provided inside the first body 10; and in some embodiments, a magnetic module is provided on the first electronic device 50. Provision of the magnetic module enables a firmer connection of the first electronic device 50 to the first body 10, allowing the user to perform related operations in a convenient way. The magnetic module includes an electromagnet, an ordinary magnet, etc.

In an embodiment of the present disclosure, an external electrical interface 31 is provided on at least one end of the connector 30. The external electrical interface 31 is electrically connected to the first electronic device 50 and/or the second electronic device 60. An external power supply is pluggable into the external electrical interface 31, and working power is provided for the first electronic device and/or the second electronic device through the external power supply.

In an embodiment of the present disclosure, a hollow structure is included in the connector 30, for example, the connector 30 is a hollow structure. A rechargeable battery is provided in the hollow structure. The rechargeable battery is electrically connected to the external electrical interface 31, the first electronic device 50 and/or the second electronic device 60. The rechargeable battery receives electric energy input from the external power supply via the external electrical interface 31, to charge the rechargeable battery. In a case that the external electrical interface 31 is not connected to an external power supply, the rechargeable battery can also provide working power for the first electronic device 50 and/or the second electronic device 60.

In an embodiment of the present disclosure, the connector 30 includes a rotating shaft assembly with a damping function, or a hinge assembly with a damping function.

In an embodiment of the present disclosure, the connector 30 can firstly ensure that the first body 10 and the second body 20 can rotate relative to the connector 30. In addition, by providing a damping function in the connector 30, after the first body 10 and the second body 20 are rotated to a relative angle, the relative angle can be maintained. As an implementation, the damping function can be embodied in various ways like gear engaging, relative friction, etc.

In an embodiment of the present disclosure, according to actual requirements, the first body 10 may be configured to be a bendable structure, that is to say, the first body 10 may include an upper portion and a lower portion, i.e. a first supporting portion and a second supporting portion. The first supporting portion and the second supporting portion are connected by a rotating shaft. A relative angle between the first supporting portion and the second supporting portion may also be adjusted and maintained based on the rotating shaft. By configuring the first body 10 to be a structure that can be bent up and down, an angle and a distance between the first electronic device 50 and the user can be adjusted in a better way, thereby making it more convenient for the user to use the first electronic device 50, such as a tablet computer or a PAD.

In an embodiment of the present disclosure, one end of the supporting body 40 is pivotally connected to the connector via a rotating shaft or a hinge, and the supporting body rotates relative to the second body 20 via the rotating shaft or the hinge.

A support apparatus for an electronic device according to an embodiment of the present disclosure may also have following structures, including:
a connector;
a first body connected to the connector;
a second body connected to the connector, the second body and the first body being capable of maintaining a first positional relationship via the connector; and
a supporting body, a first end of the supporting body being pivotally connected to the second body, and a second end of the supporting body being a free end; and the supporting body having a first state and a second state; wherein
in a case that the supporting body is in the first state, the supporting body is placed against the second body; and
in a case that the supporting body is in the second state, the free end and at least a part of the second body are supported on a supporting face provided by a supporter, to provide a balanced state for the support apparatus relative to the supporting face.

In an embodiment of the present disclosure, the first positional relationship is used to characterize an angle between the first body and the second body.

Under an external force, the second body and the first body can adjust the angle therebetween via the connector; and
upon removal of the external force, the second body and the first body maintain the angle therebetween based on the connector.

In an embodiment of the present disclosure, adjustment of the angle is not affected by the state of the supporting body; and
state changing of the supporting body is not affected by the adjustment of the angle.

In an embodiment of the present disclosure, a first face of the second body is provided with an accommodation space; and
in the case that the supporting body is in the first state, the supporting body is received in the accommodation space, and the supporting body is placed in alignment with the first face of the second body.

In an embodiment of the present disclosure, a first electronic device is provided on a first face of the first body; the first electronic device has a display module, a display output area of the display module is exposed on a first surface of the first electronic device, and a second surface of the first electronic device is placed against the first face of the first body, wherein the first surface is opposite to the second surface.

In an embodiment of the present disclosure, a second electronic device is provided on a second face of the second body; the second electronic device has an information input area, the input area is exposed on a third surface of the second electronic device, and a fourth surface of the second electronic device is placed against the second face of the second body, wherein the third surface is opposite to the fourth surface.

In an embodiment of the present disclosure, a first electrical interface is provided on the first face of the first body;
a second electrical interface is provided on the second surface of the first electronic device; in a case that the second surface of the first electronic device is placed against the first face of the first body, the second electrical interface is connected to the first electrical interface, and the first electronic device is connected to the second electronic device; and
the first electronic device further has a processing module; in response to an operation on the information input area of the second electronic device, the processing module receives the operation, and based on first information input through the information input area, displays the first information on the display module.

In an embodiment of the present disclosure, the first electrical interface has a pogo pin structure, and the second electrical interface has a contact structure; wherein
in a case that the pogo pin structure is connected to the contact structure, the first electronic device is electrically connected to the second electronic device.

In other words, the supporting body according to the embodiment of the present disclosure can also be provided directly on the second body. For example, one end of the supporting body is pivotally connected to the second body via a rotating shaft or a hinge. As an implementation, one end of the supporting body is pivotally connected to a portion of the second body below a corresponding portion where the second electronic device is located via a rotating shaft or a hinge. That is to say, the supporting body is pivotally connected to a portion on the first face of the second body corresponding to the second electronic device.

Since the support apparatus for an electronic device in which the supporting body is disposed on the second body is similar to the above-mentioned one in which the supporting body is disposed on the connector, the specific implementation will not be given here, and it can be understood by referring to the relevant description of the foregoing embodiments.

An embodiment of the present disclosure also provides an electronic device including an electronic device body and the above support apparatus for the electronic device; wherein the electronic device body is provided on the support apparatus for the electronic device. The electronic device body herein includes a tablet computer and its input device such as a keyboard and a touch screen and the like.

It will be understood that "an embodiment" or "some embodiments" mentioned throughout the specification means that specific features, structures, or characteristics related to the embodiment are included in at least one embodiment of the present disclosure. Therefore, the expression of "in one embodiment/some embodiments" or "in an embodiment" in various places throughout the specification does not necessarily refer to the same embodiment. In addition, these specific features, structures, or characteristics can be combined in one or more embodiments in any suitable manner. It will be understood that, in various embodiments of the present disclosure, the sequence numbers of the above-mentioned processes do not mean the order of execution. The execution order of each process should be determined by its function and internal logic, and should not constitute any limitation to the implementation process of the embodiments of the present disclosure. The sequence numbers of the above-mentioned embodiments of the present disclosure are only for the purpose of description, and do not represent advantages or disadvantages of the embodiments.

It should be noted that terms of "include/includes/including", "comprise/comprises/comprising" or any other variants thereof herein are intended to encompass non-exclusive inclusion, so that a process, a method, an object or an apparatus including a series of elements does not only include those elements, but also includes other elements that are not explicitly listed, or elements inherent to such process, method, object or apparatus. In a case that there are no more restrictions, an element defined by a phrase of "include/includes/including/comprise/comprises/comprising a..." does not exclude the existence of other same elements in a process, a method, an object or an apparatus that includes the element.

In the several embodiments provided in the present disclosure, it will be understood that the disclosed device and method may be implemented in other ways. The device embodiments described above are only for the purpose of illustration. For example, the division of units is only a logical function division, and there may be other divisions in actual implementations, for example, a plurality of units or assemblies can be combined together or integrated into another system, or some features may be omitted or non-existent.

The units described above as separate components may or may not be physically separated, and the components displayed as units may or may not be physical units; some or all of the units may be selected according to actual needs to implement the purpose of the solution of the embodiments.

In the embodiments of the present disclosure, by providing a support apparatus for a portable electronic device, in a case that the portable electronic device is supported by the support apparatus, the user can adjust the posture of the support apparatus according to his/her own use needs to adapt to his/her use requirements. The support apparatus according to the embodiments of the present disclosure can adjust the supporting state to make the portable electronic device placed on the support apparatus more stable. Moreover, since the supporting structure is designed in a reasonable way, there is no need to set the second body which is provided with an input area to be relatively heavy, such that the weight of the support apparatus for an electronic device is further reduced. The support apparatus according to the embodiment of the present disclosure is light and handy, and its volume is merely slightly larger than that of the portable electronic device. It is very convenient to store and carry. Among others, the electronic device and the support apparatus are connected in a detachable manner, which not only guarantees special operating functions of the portable electronic device, but also supports functions of the portable electronic device itself.

The above are only some embodiments of the present disclosure, but the protection scope of the present disclosure is not limited thereto. Any change or substitution within the technical scope disclosed in the present disclosure that one skilled in the art can easily conceive of is encompassed in the protection scope of the present disclosure. Therefore, the protection scope of the present disclosure should be defined by the claims.

## Claims

1. A support apparatus for an electronic device, comprising:
a connector;
a first body connected to the connector;
a second body connected to the connector, the second body and the first body being configured to be able to maintain a first positional relationship via the connector; and
a supporting body, a first end of the supporting body being pivotally connected to the connector, and a second end of the supporting body being a free end, and the supporting body having a first state and a second state; wherein
in a case that the supporting body is in the first state, the supporting body is placed against the second body; and
in a case that the supporting body is in the second state, the free end and at least a part of the second body are supported on a supporting face provided by a supporter, to provide a balanced state for the support apparatus relative to the supporting face.

2. The support apparatus according to claim 1, wherein the first positional relationship is used to characterize an angle between the first body and the second body;
under an external force, the second body and the first body can adjust the angle therebetween via the connector; and
upon removal of the external force, the second body and the first body maintain the angle therebetween based on the connector.

3. The support apparatus according to claim 1, wherein a first face of the second body is provided with an accommodation space; and
in the case that the supporting body is in the first state, the supporting body is received in the accommodation space, and the supporting body is placed in alignment with the first face of the second body.

4. The support apparatus according to claim 1, wherein a first electronic device is provided on a first face of the first body; the first electronic device has a display module, a display output area of the display module is exposed on a first surface of the first electronic device, and a second surface of the first electronic device is placed against the first face of the first body, wherein the first surface is opposite to the second surface.

5. The support apparatus according to claim 4, wherein a second electronic device is provided on a second face of the second body; the second electronic device has an information input area, the input area is exposed on a third surface of the second electronic device, and a fourth surface of the second electronic device is placed against the second face of the second body, wherein the third surface is opposite to the fourth surface.

6. The support apparatus according to claim 5, wherein a first electrical interface is provided on the first face of the first body;
a second electrical interface is provided on the second surface of the first electronic device; in a case that the second surface of the first electronic device is placed against the first face of the first body, the second electrical interface is connected to the first electrical interface, and the first electronic device is connected to the second electronic device; and
the first electronic device further has a processing module; in response to an operation on the information input area of the second electronic device, the processing module receives the operation, and based on first information input through the information input area, displays the first information on the display module.

7. The support apparatus according to claim 6, wherein the first electrical interface has a pogo pin structure, and the second electrical interface has a contact structure;
in a case that the pogo pin structure is connected to the contact structure, the first electronic device is electrically connected to the second electronic device.

8. The support apparatus according to claim 1, wherein a first magnetic module is provided on the first body;
a second magnetic module or a connecting component attractable with respect to the first magnetic module is provided at a position of the first electronic device corresponding to the magnetic module; or
a component or a housing is provided at a position of the first electronic device corresponding to the magnetic module, the component or the housing being made of a material attractable with respect to the first magnetic module.

9. The support apparatus according to claim 8, wherein an external electrical interface is provided on at least one end of the connector;
the external electrical interface is electrically connected to the first electronic device and/or the second electronic device; and
an external power supply is pluggable into the external electrical interface, and working power is provided to the first electronic device and/or the second electronic device through the external power supply.

10. The support apparatus according to claim 9, wherein a hollow structure is comprised in the connector;
a rechargeable battery is provided in the hollow structure; the rechargeable battery is electrically connected to the external electrical interface, the first electronic device and/or the second electronic device; the rechargeable battery receives electric energy input from the external power supply via the external electrical interface, and can provide the working power for the first electronic device and/or the second electronic device.

11. The support apparatus according to claim 1, wherein the connector comprises:
a rotating shaft assembly with a damping function, or a hinge assembly with a damping function.

12. The support apparatus according to claim 1, wherein one end of the supporting body is pivotally connected to the connector via a rotating shaft or a hinge.

13. A support apparatus for an electronic device, comprising:
a connector;
a first body connected to the connector;
a second body connected to the connector, the second body and the first body being able to maintain a first positional relationship via the connector; and
a supporting body, a first end of the supporting body being pivotally connected to the second body, and a second end of the supporting body being a free end, and the supporting body having a first state and a second state; wherein
in a case that the supporting body is in the first state, the supporting body is placed against the second body; and
in a case that the supporting body is in the second state, the free end and at least a part of the second body are supported on a supporting face provided by a supporter, to provide a balanced state for the support apparatus relative to the supporting face.

14. The support apparatus according to claim 13, wherein the first positional relationship is used to characterize an angle between the first body and the second body;
under an external force, the second body and the first body can adjust the angle therebetween via the connector; and
upon removal of the external force, the second body and the first body maintain the angle therebetween based on the connector.

15. The support apparatus according to claim 13, wherein a first face of the second body is provided with an accommodation space; and
in the case that the supporting body is in the first state, the supporting body is received in the accommodation space, and the supporting body is placed in alignment with the first face of the second body.

16. The support apparatus according to claim 13, wherein a first electronic device is provided on a first face of the first body; the first electronic device has a display module, a display output area of the display module is exposed on a first surface of the first electronic device, and a second surface of the first electronic device is placed against the first face of the first body, wherein the first surface is opposite to the second surface.

17. The support apparatus according to claim 16, wherein a second electronic device is provided on a second face of the second body; the second electronic device has an information input area, the input area is exposed on a third surface of the second electronic device, and a fourth surface of the second electronic device is placed against the second face of the second body, wherein the third surface is opposite to the fourth surface.

18. The support apparatus according to claim 17, wherein a first electrical interface is provided on the first face of the first body;
a second electrical interface is provided on the second surface of the first electronic device; in a case that the second surface of the first electronic device is placed against the first face of the first body, the second electrical interface is connected to the first electrical interface, and the first electronic device is connected to the second electronic device; and
the first electronic device further has a processing module; in response to an operation on the information input area of the second electronic device, the processing module receives the operation, and based on first information input through the information input area, displays the first information on the display module.

19. The support apparatus according to claim 18, wherein the first electrical interface has a pogo pin structure, and the second electrical interface has a contact structure;
in a case that the pogo pin structure is connected to the contact structure, the first electronic device is electrically connected to the second electronic device.

20. The support apparatus according to claim 13, wherein one end of the supporting body is pivotally connected to the second body via a rotating shaft or a hinge.

21. An electronic device, wherein the electronic device comprises an electronic device body and the support apparatus for the electronic device according to claim 1; and the electronic device body is provided on the support apparatus for the electronic device.

22. An electronic device, wherein the electronic device comprises an electronic device body and the support apparatus for the electronic device according to claim 13; and the electronic device body is provided on the support apparatus for the electronic device.
